# EUROPÄISCHE PATENTSCHRIFT

(11) **EP 2 635 403 B1**
(45) Veröffentlichungstag und Bekanntmachung des Hinweises auf die Patenterteilung: **25.03.2015**
(21) Anmeldenummer: 11779632.6
(22) Anmeldetag: 01.11.2011
(51) Int. Cl.: B24B 9/00, B08B 9/02, B24B 41/06

(54) **BÜRSTENENTGRATMASCHINE**
BRUSH DEBURRING MACHINE
MACHINE D'ÉBAVURAGE À BROSSES

(30) Priorität: 05.11.2010 DE 102010050317
(43) Veröffentlichungstag der Anmeldung: 11.09.2013
(73) Patentinhaber: Rattunde & Co GmbH, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/EP2011/069190
(87) Internationale Veröffentlichungsnummer: WO 2012/059487

(56) Entgegenhaltungen:
- DE-A1- 2 152 229
- US-A- 3 112 851
- US-A- 3 311 940
- US-A- 3 501 870

## Beschreibung

Die Erfindung betrifft eine Bürstenentgratmaschine zum Entgraten von sich gegenüberliegenden Enden eines in Längsrichtung ausgebildeten Langprofils nach dem Oberbegriff des Anspruchs 1 sowie ein Verfahren zum Entgraten der Enden des Langprofils.

Bürstenentgratmaschinen sind im Stand der Technik bekannt. Bürstenentgratmaschinen werden in der Regel nicht selbständig eingesetzt, sondern in Kombination mit Rohrschneidemaschinen, die in hoher Taktung Rohrabschnitte von einem Metallrohr ablängen. Die abgelängten Abschnitte werden nachfolgend in der Bürstenentgratmaschine weiterbehandelt, indem Metallspäne oder Ähnliches mittels rotierender Bürsten von den Enden der Rohrabschnitte entfernt werden.

Problematisch bei den bekannten Bürstenentgratmaschinen ist insbesondere bei sehr kurzen Rohrabschnitten, die eine Länge von weniger als 35 mm aufweisen, dass diese Rohrabschnitte ausgesprochen leicht sind und beim Einlegen aus der Bürstenentgratmaschine herausfallen.

In der US 3,311,940 ist eine Bürstenmaschine zur Entgratung zylindrischer Werkstücke beschrieben, wobei ein rotierendes Rad vier Aufnahmen aufweist, die von einem schräggestellten Zuförderer einzeln befüllt werden und in einer Rotationsbewegung an einer Bürste entlanglaufen.

Die US 3,501,870 betrifft eine Transporteinrichtung mit einer Empfangs- und Abgabestation und einem dazwischen angeordneten Förderband, wobei die Entnahme und Zuführung mittels Greifarmen erfolgt.

In der US 3,112,851 ist eine Maschine zum Entgraten von Gummiprofilen beschrieben, wobei die Gummiprofile manuell in Aufnahmen eines rotierenden Rades gelegt werden, das an zwei sich gegenüberliegenden rotierenden Bürstenköpfen vorbeiläuft.

Die DE 21 52 229 offenbart eine Entgratmaschine für Stabmaterial mittels Bürsten, wobei das Stabmaterial durch ein Förderband entlang einer rotierenden Bürste befördert wird und dabei entgratet.

Es ist Aufgabe der Erfindung, eine Bürstenentgratmaschine sowie ein Verfahren zum Bürstenentgraten zur Verfügung zu stellen, die die genannten Nachteile vermeiden.

Die Aufgabe wird durch eine eingangs genannte Bürstenentgratmaschine sowie ein eingangs genanntes Verfahren mit den Merkmalen der jeweiligen unabhängigen Ansprüche gelöst.

Die erfindungsgemäße Bürstenentgratmaschine eignet sich insbesondere zum Entgraten von sehr kurzen und leichten abgelängten Abschnitten eines insbesondere metallischen Langprofils. Unter Langprofil werden Hohl- als auch Vollprofile verstanden, deren Querschnitt beliebig, vorzugsweise über die gesamte Längsausdehnung kreisförmig sein kann. Die Langprofile sind vorzugsweise vollständig aus Metall. Die Langprofile können Abschnitte sein, also von noch längeren Langprofilen abgelängte, abgesägte, abgeschnittene Abschnitte. Dabei können die Langprofile einzeln oder in Bündeln von zwei, drei, vier oder mehr Langprofilen gleichzeitig mittels eines Greifarmes gegriffen und in miteinander korrespondierende Aussparungen von sich gegenüberliegenden Transportscheiben eingelegt werden. Zur Vermeidung eines sofortigen Herausfallens des wenigstens einen Langprofils weist die erfindungsgemäße Bürstenentgratmaschine eine zwischen den korrespondierenden Aussparungen der sich gegenüberliegenden Transportscheiben angeordnete Andrückeinrichtung auf, mit der eine Kraft auf das wenigstens eine Langprofil in Richtung hinsichtlich der Transportscheiben nach radial innen in die korrespondierenden Aussparungen hinein ausübbar ist. Durch die Andrückeinrichtung wird ein Herausfallen des wenigstens einen Langprofils direkt nach dessen Einlegen aus den beiden korrespondierenden Aussparungen verhindert. Die Andrückeinrichtung drückt das Langprofil bzw. das Bündel der Langprofile an die radial innerste Wandung der Aussparung. Das Langprofil liegt nach dem Einlegen ohne Spiel in der Aussparung.

Die Andrückeinrichtung übt eine Kraft auf das Langprofil aus, die zum Erdboden hinweist, also die entlang der Erdanziehungskraft gerichtet ist.

Vorzugsweise weist die Andrückeinrichtung eine in Transportrichtung länglich ausgebildete Feder auf, deren von den korrespondierenden Aussparungen abgewandtes Ende positionsfest an einem Rahmen der Bürstenentgratmaschine angeordnet ist und deren den korrespondierenden Aussparungen zugewandtes freies Ende radial außen auf dem wenigstens einen Langprofil unter Kraftausübung nach radial innen aufliegt. Bei dieser besonders bevorzugten Ausführungsform der Erfindung ist die Andrückeinrichtung besonders einfach und damit wartungsarm, beinahe wartungsfrei ausgebildet. Die Andrückeinrichtung besteht im Wesentlichen aus einer leicht wellenförmig geschwungenen elastischen Stahlfeder, deren positionsfestes Ende schneckenförmig aufgewickelt ist. Aus dieser schneckenförmigen Aufwicklung resultiert auch ein Teil der Federkraft. Das freie Ende der Feder ist vertikal nach unten zum Boden geführt.

Vorzugsweise ist das freie Ende der Feder zwischen den beiden Reihen Transportscheiben angeordnet. Das freie Ende ist mittels des durch die Greifeinrichtung gegriffenen Langprofils anhebbar, indem das Langprofil das freie Ende hintergreift und die Greifeinrichtung eine Bewegung in Richtung nach radial außen durchführt und das freie Ende der Feder damit nach radial außen anhebt. Der "Witz" an dieser Ausführungsform ist die besonders einfache Ausführung der Andrückeinrichtung, die im Wesentlichen ein gebogener Draht ist.

Hinsichtlich des Verfahrens wird die Aufgabe durch die Merkmale des Anspruchs 4 gelöst, indem das wenigstens eine Langprofil mit der Greifeinrichtung gegriffen wird und in die miteinander korrespondierenden Aussparungen eingelegt wird und die zwischen den korrespondierenden Aussparungen angeordnete Andrückeinrichtung eine Kraft auf das wenigstens eine Langprofil in Richtung hinsichtlich der Transportscheiben nach radial innen in die korrespondierenden Aussparungen hinein ausübt. Die Kraft wirkt dabei zum Erdboden hin entlang der Erdanziehungskraft. Das Langprofil kann somit durch Drehung der Transportscheiben oben herum, also oberhalb, d.h. dem Erdboden abgewandt, der Drehachse der Transportscheiben vortransportiert werden. Das Langprofil liegt in der Aussparung drin und wird von oben in die Aussparung zusätzlich hineingedrückt.

Vorzugsweise hintergreift das von der Greifeinrichtung gegriffene wenigstens eine Langprofil bei einer Bewegung nach radial außen das freie Ende der Feder und spannt die Feder dadurch etwas weiter zusätzlich an, legt dann das wenigstens eine Langprofil in die beiden miteinander korrespondierenden Aussparungen ein, wodurch das freie Ende der Feder automatisch von radial außen nach radial innen eine Kraft ausübt, die das wenigstens eine Langprofil in die beiden Aussparungen hineindrückt.

Die Erfindung wird anhand eines Ausführungsbeispiels in sechs Figuren beschrieben. Dabei zeigen:
- Fig.1a: Einlegen eines abgelängten Rohrabschnitts in die erfindungsgemäße Bürstenentgratmaschine,
- Fig. 1b: Öffnen des Greifarmes,
- Fig. 1c: Transport der abgelängten Rohrabschnitte entlang der Transportrichtung mittels der Transportscheiben,
- Fig. 2a: eine seitliche Ansicht der Figur 1a,
- Fig. 2b: eine seitliche Ansicht der Figur 1b,
- Fig. 2c: eine seitliche Ansicht der Figur 1c.

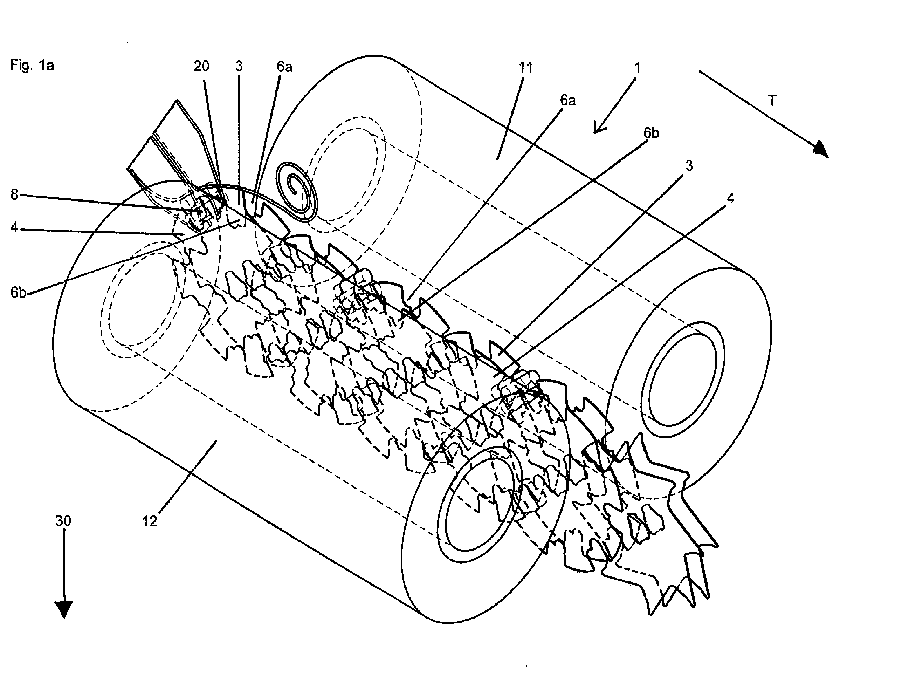

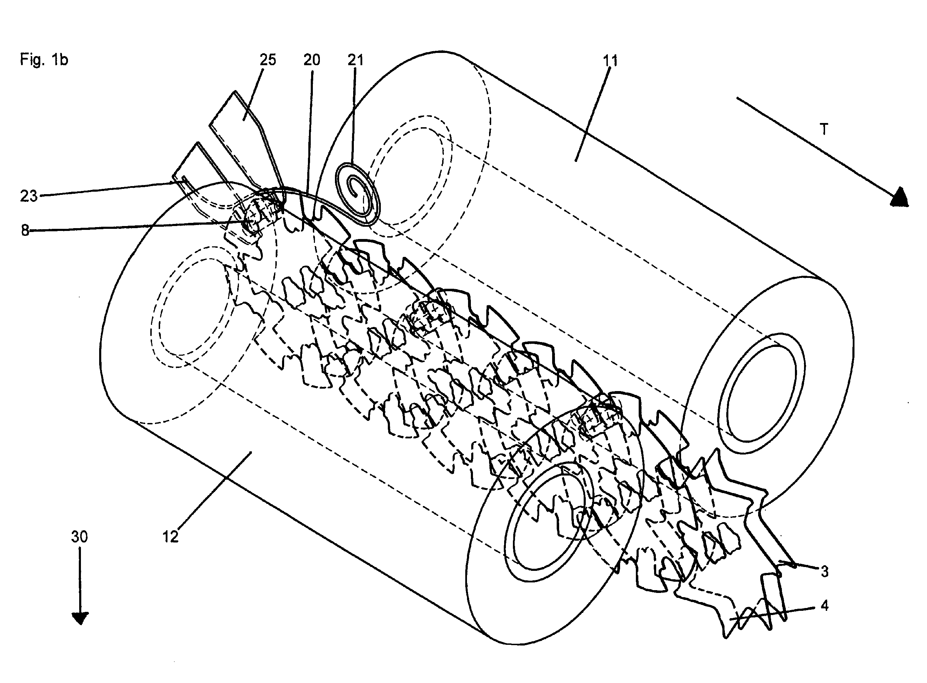

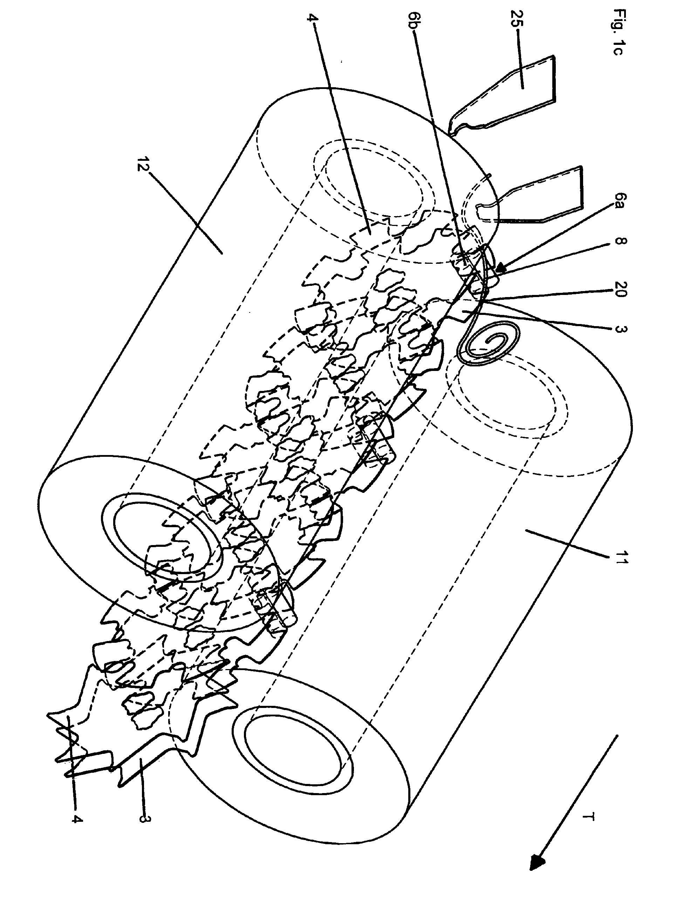

Fig. 1 a zeigt die erfindungsgemäße Bürstenentgratmaschine 1 mit einer ersten und einer zweiten Reihe versetzt ineinander angeordneter Transportscheiben 3, 4. Jede Reihe der Transportscheiben 3, 4 ist in jeweils einem (nicht dargestellten) Rahmenarm drehbar angeordnet. Die Transportscheiben 3, 4 sind einander gegenüberliegend angeordnet und weisen miteinander korrespondierende Aussparungen 6a, 6b auf. Die jeweils miteinander korrespondierenden beiden Aussparungen 6a, 6b ermöglichen es, Bündel 8 abgelängter Rohrabschnitte in Transportrichtung T zu befördern. Während des Transportes der Bündel 8 abgelängten Rohrabschnitte werden die beiden über die Transportscheiben 3, 4 hinaus abstehenden Rohrenden der drei abgelängten Rohrabschnitte jedes Bündels 8 von zwei in Transportrichtung T ausgerichteten Bürstenrollen 11, 12 entgratet.

Insbesondere beim Einlegen der Bündel 8 abgelängter Rohrabschnitte in die miteinander korrepondierenden Aussparungen 6a, 6b der Transportscheiben 3, 4, fallen die, insbesondere der radial äußerste der abgelängten Rohrabschnitte, leicht wieder aus den Aussparungen 6a, 6b heraus. Um das Herausfallen der abgelängten Rohrabschnitte der Bündel 8 aus den Aussparungen 6a, 6b beim Einlegen zu verhindern, ist eine unter Vorspannung stehende Stahlfeder 20 vorgesehen, die ebenfalls in Transportrichtung T ausgerichtet ist und die mit einem in Transportrichtung T vorlaufenden Ende 21 positionsfest an einem (nicht dargestellten) Rahmen befestigt ist und an einem in Transportrichtung T nachlaufenden freien Ende 23 unter einer Vorspannung von radial außen gegen das in die beiden korrespondierenden Aussparungen 6a, 6b gerade eingelegte Bündel 8 drückt und dadurch die Rohrabschnitte in den beiden miteinander korrespondierenden Aussparungen 6a, 6b festhält. Die Stahlfeder 20 ist so angeordnet, dass der Rohrabschnitt 8 in den Aussparungen 6a, 6b liegt und zusätzlich in die Aussparungen 6a, 6b hineingedrückt wird und die radial innerste Wandung der Aussparung berührt. Der Rohrabschnitt 8 ist so spielfrei in der Aussparung 6a, 6b gehalten. Der Rohrabschnitt 8 wird durch die zwei Reihen von Transportscheiben 3, 4 oberhalb der Drehachsen der Transportscheiben 3, 4 vortransportiert. Ohne die Stahlfeder 20 würden die Rohrabschnitte 8 während des Vortransportes in den Aussparungen 6a, 6b drin liegen und nicht herausfallen.

Die Stahlfeder 20 ist aus elastischem Stahl ausgebildet und weist in Transportrichtung T einen geschwungenen Verlauf auf.

Mittels eines Greifarms 25 wird das aus drei abgelängten Rohrabschnitten bestehende Bündel 8 in zwei miteinander korrespondierende Aussparungen 6a, 6b der ersten beiden Transportscheiben 3, 4 eingelegt. Dabei führt der Greifarm 25 eine Bewegung vom Boden 30 unterhalb des freien Endes 23 von unten nach oben hin aus und drückt dabei mittels des Bündels 8 das freie Ende 23 der Feder 20 nach oben. Das Bündel 8 wird nachfolgend unterhalb der angehobenen Feder 20 in die beiden Aussparungen 6a, 6b eingelegt. Dieser Zustand ist in Figur 1a gezeigt. In einem nachfolgenden Verfahrensschritt öffnet der Greifarm 25 seine beiden Backen und lässt das Bündel 8 frei. Das freie Ende 23 der Stahlfeder 20 drückt automatisch von radial außen nach radial innen und hält dabei das Bündel 8 unter Krafteinwirkung fest in den beiden miteinander korrespondierenden Aussparungen 6a, 6b.

Fig. 1c zeigt einen weiteren Verfahrensschritt, in dem das Bündel 8 der Rohrabschnitte mittlerweile ein Stück weit in Transportrichtung T vortransportiert wurde und der Greifarm 25 bereits von dem eingelegten Bündel 8 wegbewegt wurde, um ein neues (nicht dargestelltes) Bündel zu greifen und in ein in Drehrichtung der Transportscheiben 3, 4 nachlaufendes Paar korrespondierender Aussparungen 6a, 6b der in Transportrichtung T ersten beiden Transportscheiben 3, 4 einzulegen.

Fig. 1a, 1b und 1c zeigen in dieser Reihenfolge aufeinanderfolgende Verfahrensschritte.

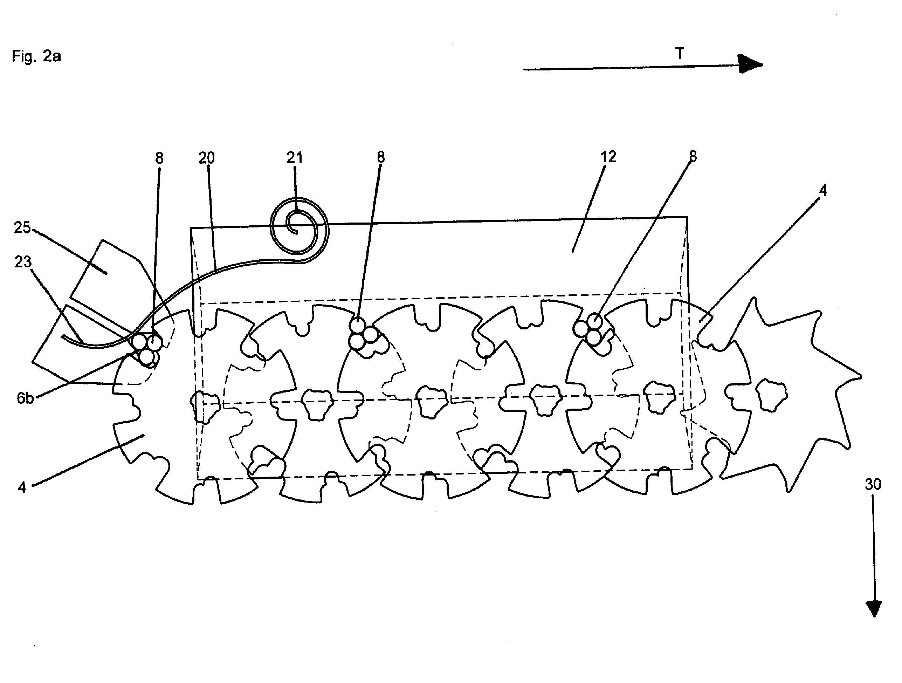

Fig. 2a zeigt eine seitliche Ansicht, teilweise als Schnitt der Fig. 1 a. Der Greifarm 25 umgreift jeweils drei das Bündel 8 ausbildende Rohrabschnitte. Das Bündel 8 hat bereits das freie nachlaufende Ende 23 der Feder 20 durch eine stetige Bewegung vom Boden 30 nach oben und ein Stück weit in Transportrichtung T und dann wieder nach unten zum Boden 30 hin zunächst etwas angehoben und das Bündel 8 in die miteinander korrespondierenden beiden Aussparungen 6a, 6b eingelegt und dabei das freie Ende 23 wieder etwas abgesenkt.

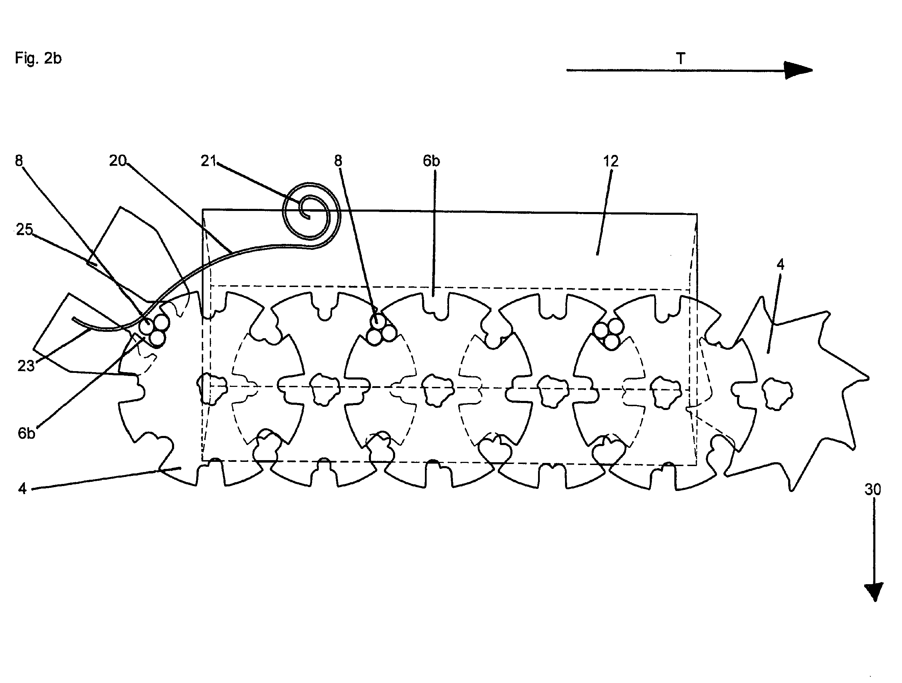

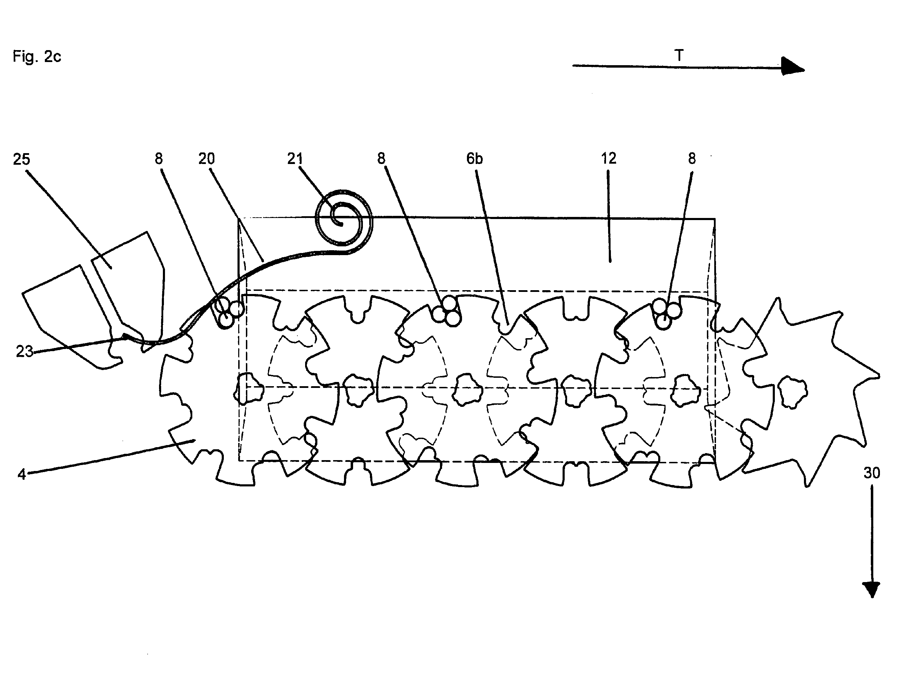

Die Figuren 2a, 2b, 2c zeigen des Weiteren zwei weiter vortransportierte Bündel 8 von jeweils drei Rohrabschnitten.

Das freie Ende 23 der Stahlfeder 20 übt in Fig. 2b eine radiale Kraft auf das Bündel 8 aus und drückt dadurch jeden der Rohrabschnitte insbesondere den radial äußeren abgelängten Rohrabschnitt in die beiden miteinander korrespondierenden Aussparungen 6a, 6b hinein und verhindert so ein selbständiges Herausfallen der Rohrabschnitte aus den beiden Aussparungen 6a, 6b der sich gegenüberliegenden ersten Transportscheiben 3, 4.

Fig. 2b zeigt einen der Fig. 2a nachfolgenden Verfahrensschritt, in dem der Greifarm 25 das Bündel 8 der drei Rohrabschnitte freigegeben hat und das freie Ende 23 der Feder 20 eine Kraft in Richtung nach radial innen auf das Bündel 8 ausübt.

Fig. 2c zeigt das eingelegte Bündel 8, das bereits ein Stück weit in Transportrichtung T vorantransportiert ist. Auch die anderen Bündel 8 sind in gleichem Maße wie das eingelegte Bündel vorantransportiert durch Drehung der Transportscheiben 3, 4. Alle Transportscheiben 3, 4 drehen sich stetig und mit gleicher Umdrehungszahl. Während des Transportes in Transportrichtung T werden die Rohrenden der abgelängten Rohrabschnitte mittels der beiden sich gegenüberliegenden rotierenden Bürstenrollen 11, 12 entgratet.

### Bezugszeichenliste

- 1: Bürstenentgratmaschine
- 3: Transportscheibe
- 4: Transportscheibe
- 6a: Aussparung
- 6b: Aussparung
- 8: Bündel von Rohrabschnitten
- 11: Bürstenrolle
- 12: Bürstenrolle
- 20: Stahlfeder
- 21: positionsfestes Ende der Stahlfeder
- 23: freies Ende der Stahlfeder
- 25: Greifarm
- 30: Boden

- T: Transportrichtung

## Patentansprüche

1. Bürstenentgratmaschine (1) zum Entgraten von sich gegenüberliegenden Enden wenigstens eines in Längsrichtung ausgebildeten Langprofils (8) während eines Transportes in einer Transportrichtung (T) mit
zwei in Transportrichtung (T) angeordneten Reihen von Transportscheiben (3, 4), wobei die Transportscheiben (3, 4) sich paarweise gegenüberliegen und jeweils wenigstens eine mit einer gegenüberliegenden Aussparung (6a) korrespondierende Aussparung (6b) zur Aufnahme des wenigstens einen Langprofils (8) aufweisen, einer Greifeinrichtung (25), mit der das wenigstens eine Langprofil (8) in die miteinander korrespondierenden Aussparungen (6a, 6b) einlegbar ist,
und
eine zwischen den korrespondierenden Aussparungen (6a, 6b) angeordnete Andrückeinrichtung (20), mit der eine Kraft auf das wenigstens eine Langprofil (8) in Richtung hinsichtlich der Transportscheiben (3, 4) nach radial innen, in die korrespondierenden Aussparungen (6a, 6b) hinein, ausübbar ist und die ein Herausfallen des wenigstens einen Langprofils (8) direkt nach dessen Einlegen aus den beiden korrespondierenden Aussparungen (6a, 6b) verhindert.

2. Bürstenentgratmaschine (1) nach Anspruch 1,
**dadurch gekennzeichnet, dass** die Andrückeinrichtung (20) eine in Transportrichtung (T) länglich ausgebildete Feder (20) aufweist, deren den korrespondierenden Aussparungen (6a, 6b) abgewandtes Ende (21) positionsfest an einem Rahmen angeordnet ist und deren den korrespondierenden Aussparungen (6a, 6b) zugewandtes freies Ende (23) radial außen auf dem wenigstens einen Langprofil (8) unter Kraftausübung nach radial innen aufliegt.

3. Bürstenentgratmaschine (1) nach Anspruch 2,
**dadurch gekennzeichnet, dass** das freie Ende der Feder (23) zwischen den beiden Reihen Transportscheiben (3, 4) angeordnet ist und das freie Ende (23) mittels des durch die Greifeinrichtung (25) gegriffenen wenigstens einen das freie Ende (23) hintergreifenden Langprofils (8) durch eine in Richtung nach radial außen geführten Bewegung anhebbar ist.

4. Verfahren zum Entgraten von sich gegenüberliegenden Enden wenigstens eines in Längsrichtung ausgebildeten Langprofils (8) während eines Transportes in einer Transportrichtung (T) mit zwei in Transportrichtung (T) angeordneten Reihen von Transportscheiben (3, 4), wobei die Transportscheiben (3, 4) sich paarweise gegenüberliegen und jeweils wenigstens eine mit einer gegenüberliegenden Aussparung (6a) korrespondierende Aussparung (6b) zur Aufnahme des wenigstens einen Langprofils (8) aufweisen, indem
das wenigstens eine Langprofil (8) mit einer Greifeinrichtung (25) gegriffen wird und in die miteinander korrespondierenden Aussparungen (6a, 6b) eingelegt wird und eine zwischen den korrespondierenden Aussparungen (6a, 6b) angeordnete Andrückeinrichtung (20) eine Kraft auf das wenigstens eine Langprofil (8) in Richtung hinsichtlich der Transportscheiben (3, 4) nach radial innen in die korrespondierenden Aussparungen (6a, 6b) hinein ausübt und die ein Herausfallen des wenigstens einen Langprofils (8) direkt nach dessen Einlegen aus den beiden korrespondierenden Aussparungen (6a, 6b) verhindert.

5. Verfahren nach Anspruch 4,
**dadurch gekennzeichnet, dass** die Greifeinrichtung (25) mit dem gegriffenen wenigstens einen Langprofil (8) in einer Bewegung nach radial außen ein freies Ende (23) einer als Feder (20) ausgebildeten Andrückeinrichtung hintergreift und das freie Ende (23) nach radial außen spannt und dann das wenigstens eine Langprofil (8) in die korrespondierenden Aussparungen (6a, 6b) einlegt, wodurch sich das freie Ende (23) etwas entspannt und in Richtung nach radial innen eine Kraft auf das wenigstens eine Langprofil (8) ausübt.

## Claims

1. A brush-type deburring machine (1) for deburring opposed ends of at least one elongate profile (8) formed in the longitudinal direction during conveying in a conveying direction (T) with
two rows of conveying discs (3, 4) arranged in the conveying direction (T), wherein the conveying discs (3, 4) are arranged opposite one another in pairs and in each case have at least one aperture (6b) corresponding to an opposite aperture (6a) for receiving the at least one elongate profile (8), a gripping device (25) by which the at least one elongate profile (8) is capable of being inserted into the mutually corresponding apertures (6a, 6b), and
a pressing device (20) which is arranged between the corresponding apertures (6a, 6b) and by which a force is capable of being exerted upon the at least one elongate profile (8) in a direction radially towards the inside with respect to the conveying discs (3, 4) into the corresponding apertures (6a, 6b) and which prevents the at least one elongate profile (8) from falling out of the two corresponding apertures (6a, 6b) directly after it has been inserted.

2. A brush-type deburring machine (1) according to Claim 1, **characterized in that** the pressing device (20) has a spring (20) which is made elongate in the conveying direction (T) and the end (21) of which facing away from the corresponding apertures (6a, 6b) is arranged fixed in position on a frame and the free end (23) of which facing the corresponding apertures (6a, 6b) rests radially on the outside on the at least one elongate profile (8) exerting force radially towards the inside.

3. A brush-type deburring machine (1) according to Claim 2, **characterized in that** the free end of the spring (23) is situated between the two rows of conveying discs (2, 3), and the free end (23) is capable of being lifted by means of the at least one elongate profile (8) gripped by the gripping device (8) and engaging behind the free end (23) by a movement performed in a direction radially towards the outside.

4. A method of deburring opposed ends of at least one elongate profile (8) formed in the longitudinal direction during conveying in a conveying direction (T) with two rows of conveying discs (3, 4) arranged in the conveying direction (T), wherein the conveying discs (3, 4) are arranged opposite one another in pairs and in each case have at least one aperture (6b) corresponding to an opposite aperture (6a) for receiving the at least one elongate profile (8), in that the at least one elongate profile (8) is gripped by a gripper device (25) and is inserted in the mutually corresponding apertures (6a, 6b) and a pressing device (20) arranged between the corresponding apertures (6a, 6b) exerts a force upon the at least one elongate profile (8) in a direction radially towards the inside with respect to the conveying discs (3, 4) into the corresponding apertures (6a, 6b) and which prevents the at least one elongate profile (8) from falling out of the two corresponding apertures (6a, 6b) directly after it has been inserted.

5. A method according to Claim 4, **characterized in that** the gripping device (25) engages with the at least one gripped elongate profile (8) behind a free end (23) of a pressing device designed in the form of a spring (20) during a movement radially towards the outside and stresses the free end (23) radially towards the outside and then inserts the at least one elongate profile (8) then into the corresponding apertures (6a, 6b), as a result of which the free end (23) is slightly released and exerts a force in a direction radially towards the inside upon the at least one elongate profile (8).

## Revendications

1. Machine pour ébarber à brosses (1) pour ébarber des extrémités opposées d'au moins un profil long (8) configuré dans le sens longitudinal pendant un transport dans un sens de transport (T) avec
deux rangées de disques de transport (3, 4) placées dans le sens de transport (T), cependant que les disques de transport (3, 4) sont opposés par paires et présentent respectivement au moins un évidement (6b) correspondant à un évidement opposé (6a) pour loger le profil long qui existe au moins (8),
un dispositif de prise (25) avec lequel le profil long qui existe au moins (8) peut être inséré dans les évidements qui correspondent l'un à l'autre (6a, 6b) et
un dispositif d'application de pression (20) placé entre les évidements correspondants (6a, 6b) avec lequel une force peut être exercée sur le profil long qui existe au moins (8) dans le sens radialement vers l'intérieur par rapport aux disques de transport (3, 4) et qui empêche que le profil long qui existe au moins (8) ne tombe des deux évidements qui correspondent l'un à l'autre (6a, 6b) directement après qu'il ait été inséré.

2. Machine pour ébarber à brosses (1) selon la revendication 1, **caractérisée en ce que** le dispositif d'application de pression (20) présente un ressort (20) configuré allongé dans le sens de transport (T) dont l'extrémité (21) éloignée des évidements correspondants (6a, 6b) est placée en position fixe sur un cadre et dont l'extrémité libre (23) qui est tournée vers les évidements correspondants (6a, 6b) repose radialement à l'extérieur sur le profil long qui existe au moins (8) en exerçant une force radialement vers l'intérieur.

3. Machine pour ébarber à brosses (1) selon la revendication 2, **caractérisée en ce que** l'extrémité libre du ressort (23) est placée entre les deux rangées de disques de transport (3, 4) et l'extrémité libre (23) peut être soulevée au moyen du profil long (8) qui existe au moins qui est pris par le dispositif de prise (25) en saisissant l'extrémité libre (23) par derrière par un mouvement qui est guidé radialement vers l'extérieur.

4. Procédé pour ébarber des extrémités opposées d'au moins un profil long (8) configuré dans le sens longitudinal pendant un transport dans un sens de transport (T) avec
deux rangées de disques de transport (3, 4) placées dans le sens de transport (T), cependant que les disques de transport (3, 4) sont opposés par paires et présentent respectivement au moins un évidement (6b) correspondant à un évidement opposé (6a) pour loger le profil long qui existe au moins (8), le profil long qui existe au moins (8) étant pris avec un dispositif de prise (25) et étant inséré dans les évidements qui correspondent l'un à l'autre (6a, 6b) et un dispositif d'application de pression (20) placé entre les évidements correspondants (6a, 6b) exerçant une force sur le profil long qui existe au moins (8) dans le sens radialement vers l'intérieur par rapport aux disques de transport (3, 4) dans les évidements correspondants (6a, 6b) et qui empêche que le profil long qui existe au moins (8) ne tombe des deux évidements qui correspondent l'un à l'autre (6a, 6b) directement après qu'il ait été inséré.

5. Procédé selon la revendication 4, **caractérisé en ce que** le dispositif de prise (25) saisit par derrière, avec le profil long qui existe au moins (8), une extrémité libre (23) d'un dispositif d'application de pression configuré comme un ressort (20) dans un mouvement radialement vers l'extérieur et tend l'extrémité libre (23) radialement vers l'extérieur et insère ensuite le profil long qui existe au moins (8) dans les évidements correspondants (6a, 6b) si bien que l'extrémité libre (23) est un peu relâchée et exerce une force sur le profil long qui existe au moins (8) dans le sens radialement vers l'intérieur.
